# EUROPEAN PATENT SPECIFICATION

(11) **EP 3 868 146 B1**
(45) Date of publication and mention of the grant of the patent: **16.04.2025**
(21) Application number: 18937205.5
(22) Date of filing: 19.10.2018
(51) Int. Cl.: H04W 28/02, H04W 28/24, H04W 36/14, H04L 47/24, H04L 47/2475

(54) **CONFIGURING QUALITY OF SERVICE**
KONFIGURATION DER DIENSTGÜTE
CONFIGURATION DE QUALITÉ DE SERVICE

(43) Date of publication of application: 25.08.2021
(73) Proprietor: Nokia Solutions and Networks Oy, 02610 Espoo (FI)
(72) Inventor: WANG, Zhi, Qingdao, Shandong 266003 (CN); CAI, Yigang, Naperville, Illinois 60564 (US)
(74) Representative: Novagraaf Technologies
(86) International application number: PCT/CN2018/110951
(87) International publication number: WO 2020/077607

(56) References cited:
- WO-A1-2018/146056
- CN-A- 108 513 726
- CN-A- 108 632 910
- US-A1- 2018 234 876

## Description

### BACKGROUND

A network may transport, to a user device, various types of data in connection with applications and/or services running on, or available to, the user device. Data for the applications and/or services may be sensitive to one or more network conditions. For example, data for some applications and/or services may be sensitive to latency and, if the network delivers the latency-sensitive data with a high latency, the performance of the applications and/or services may degrade. Data for other applications and/or services may be sensitive to throughput and, if the network delivers throughput-sensitive data with a low throughput, the performance of the applications and/or services may degrade. Further, data for the applications and/or services may be tolerant to one or more network conditions. For example, data for some applications and/or services may be tolerant to latency and, if the network delivers the latency-tolerant data with a high latency, the performance of the applications and/or services may not degrade. Data for other applications and/or services may be tolerant to throughput and, if the network delivers the throughput-tolerant data with a low throughput, the performance of the applications and/or services may not degrade.

A network may transport data based on the sensitivities and tolerances of the data for the applications and/or services. For example, a network may be configured to provide different levels of quality of service (QoS). Each level of QoS may indicate how the network will transport data associated with that level of QoS. For example, a level of QoS may indicate one or more guarantees, or limits, for latency and throughput. Any data associated with that level of QoS may be processed and/or allocated with network resources in an attempt to deliver the data based on the one or more guarantees, or limits, for latency and throughput. There are many ways in which network technologies associate data with a level of QoS. For example, in a 4G radio access network, a QoS Class Identifier (QCI) may be used to associate data with a level of QoS. In a 5G radio access network a QoS flow identifier (QFI) may be used to associate data with a level of QoS.

WO 2018/146056 A1 discloses a method wherein PDU session is modified for some reason and PDU Session Modification command is sent by a 5G radio access network to a UE. US 2018/234876 A1 discloses a method wherein session management function, SMF, sends a PDU session modification to a UE.

### BRIEF SUMMARY

The present invention is defined by the independent claims. Further embodiments are set forth in the dependent claims.

According to the claimed invention, there is provided a method comprising: receiving, by a computing device associated with a first network, from an application or service server, and via a second network, quality of service, QoS, information, wherein the QoS information associates an application or service with one or more QoS flow identifiers, QFIs, and wherein the computing device is configured to operate as a QoS management function, QMF, and a Network Exposure Function, NEF; generating, based on the QoS information, a QoS profile that indicates the one or more QFIs; determining that the QoS profile is associated with a user device based on an indication of a PDU session established for the user device and associated with the transportation of data for the application or service, sending the QoS profile to the user device via the first network, receiving from the user device, via the first network, a selected QFI from the one or more QFIs, and sending, by the computing device, a request to modify the PDU session, wherein the request to modify the PDU session indicates the selected QFI, and wherein the request to modify the PDU session is configured to cause performance of a procedure for modifying, based on the selected QFI, the PDU session.

### BRIEF DESCRIPTION OF THE DRAWINGS

Some example embodiments are illustrated by way of example and not limited in the accompanying figures in which like reference numerals indicate similar elements and in which:
FIG. 1 shows a schematic diagram showing an example communication network in which features described herein may be implemented.
FIG. 2 shows a schematic diagram of an example protocol data unit (PDU) session that is associated with one or more QoS flows.
FIGs. 3A and 3B show one or more example process sequences for configuring a PDU session and transporting data according to one or more levels of QoS.
FIG. 4 shows one or more example methods for interfacing between one or more network resources and a server of an application or service to enable the configuration of a PDU session.
FIG. 5 shows one or more example methods for interfacing between two or more network resources to enable the configuration of a PDU session.
FIG. 6 shows an example apparatus that may be used in a network environment described herein or used to implement one or more aspects described herein.
FIG. 7 shows an example system that may be used in a network environment described herein or used to implement one or more aspects described herein.

### DETAILED DESCRIPTION

In the following description of various illustrative embodiments, reference is made to the accompanying drawings, which form a part hereof, and in which are shown by way of illustration various embodiments in which the disclosure may be practiced. It is to be understood that other embodiments may be utilized and structural and functional modifications may be made without departing from the scope of the present disclosure.

As discussed above, a network may transport data based on the sensitivities and tolerances of the data for the applications and/or services. For example, a network may be configured to provide different levels of quality of service (QoS). Each level of QoS may indicate how the network will transport data associated with that level of QoS. For example, a level of QoS may indicate one or more guarantees, or limits, for latency and throughput. Any data associated with that level of QoS may be processed and/or allocated with network resources in an attempt to deliver the data based on the one or more guarantees, or limits, for latency and throughput. There are many ways in which network technologies associate data with a level of QoS. In a 4G radio access network, a QoS Class Identifier (QCI) may be used to associate data with a level of QoS. In a 5G radio access network a QoS flow identifier (QFI) may be used to associate data with a level of QoS.

There are, however, complexities involved in associating a level of QoS with particular data that is to be transported over a network. For example, an application or service may provide different types of data for transport over a network, and each type of data may be sensitive and/or tolerant to a different set of network conditions. To account for these different types of data, existing network infrastructure may associate the data for transport with a level of QoS based on performance of an analysis and classification scheme. The network infrastructure, however, may not have enough information about a type of data for the application or service to efficiently perform the analysis and classification. Other sources may have more information regarding the data and obtaining that information may improve the ability to associate the data with levels of QoS. Examples of such sources include a server, computing device, provider or other entity associated with the application or service. These sources may provide, for example, information indicating the types of data that will be provided for transport over the network, information indicating one or more levels of QoS that can be associated with the types of data, and information indicating how to charge, or bill, for the types of data and/or the one or more levels of QoS. This information may be used to configure QoS for the application or service.

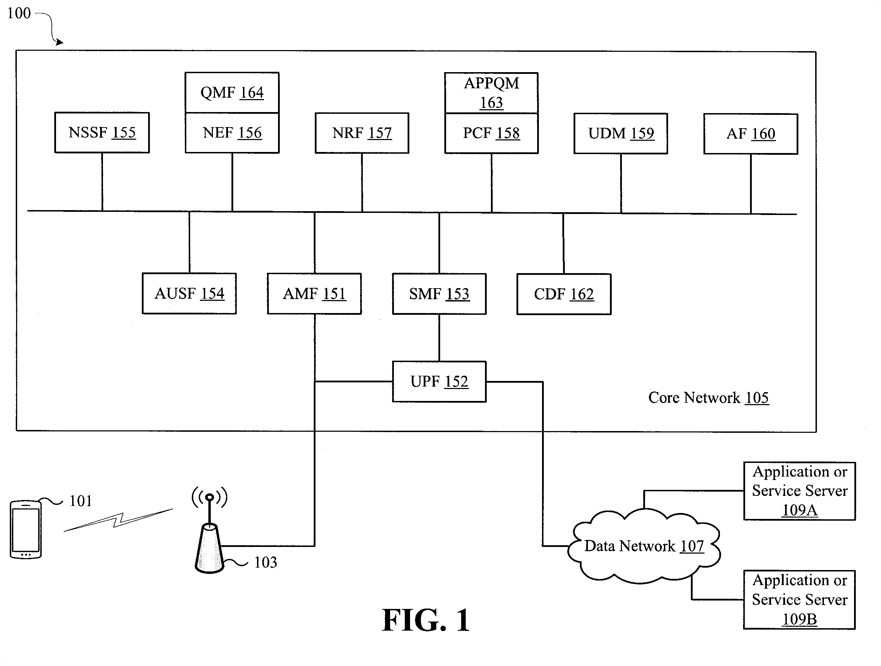

FIG. 1 is a schematic diagram showing an example communication network 100 in which features described herein may be implemented. The communication network 100 may include one or more user devices (e.g., user device 101), one or more radio access networks (e.g., radio access network 103), one or more core networks (e.g., core network 105), one or more data networks (e.g., data network 107), and one or more application or service servers (e.g., application or service servers 109A, 109B). The communication network 100 may be configured to implement various communication protocols, such as communication protocols specified by the Third Generation Partnership Project (3GPP).

The user device 101 may include, for example, a smartphone, personal computer, tablet, desktop computer, laptop computer, gaming device, virtual reality headset, or any other mobile device or other fixed device having a wireless interface configured to communicating with a radio access network. An application or service server 109A, 109B may be implanted using one or more computing devices and may be configured to offer any desired data service. For example, an application service server 109A, 109B may provide, via the data network 107, to the core network 105. The core network 105 may transport the data to the user device 101 via the radio access network 103.

The data network 107 may be a single network or a collection of multiple connected networks. The data network 107 may include one or more of any of various types of information distribution networks, such as, without limitation, a satellite network, a telephone network, a cellular network, a Wi-Fi network, an Ethernet network, an optical fiber network, a coaxial cable network, a hybrid fiber coax network, etc. The data network 107 may include a local area network (LAN), a wide area network (WAN), a backbone network, etc. The data network 107 may include an Internet Protocol (IP) based network (e.g., the Internet). The data network 107 may include a plurality of interconnected communication links (e.g., to connect the data network service servers 109A, 109B and/or other devices).

The radio access network 103 may include any type of device used to implement radio access technologies, such as the third generation wireless systems (3G), the fourth generation wireless systems (4G), Long Term Evolution (LTE), and the fifth generation wireless systems (5G). For example, the radio access network 103 may include a Universal Terrestrial Radio Access Network (UTRAN), Evolved Node B (eNodeB), gNodeB (gNB), or other types of radio access networks. The radio access network 103 may be configured to implement a radio protocol stack. The radio access network 103 may additionally or alternatively include a cloud radio access network (e.g., comprising central units and distributed units together carrying out the radio protocol stack).

The core network 105 may include processes implemented on one or more computing devices. The core network 105 may be configured to manage connectivity between the user device 101 and the data network 107 (e.g., the Internet) via the radio access network 103. The core network 105 may include, for example, an Evolved Packet Core (EPC), a 5G Core Network, or other types of core networks. The core network 105 may communicate with the radio access network 103 and/or the data network 107 via any type of communication link, such as an IP-based communication link. The radio access network 103 and the core network 105 may be configured to provide wireless communication between the user device 101 and the data network 107 (e.g., the Internet).

Example components of the core network 105 (e.g., a 5G Core Network) are shown in FIG. 1. The core network 105 may include one or more network functions, such as an AMF 151 (Core Access and Mobility Management Function), an UPF 152 (User plane Function), an SMF 153 (Session Management Function), an AUSF 154 (Authentication Server Function), a NSSF 155 (Network Slice Selection Function), a NEF 156 (Network Exposure Function), a NRF 157 (Network Repository Function), a PCF 158 (Policy Control Function), an UDM 159 (Unified Data Management), an AF 160 (Application Function), a CDF 162 (Charging Domain Function), an APPQM 163 (Application or Service QoS Management Function), a QMF 164 (a QoS Management Function), and/or other network functions. The network functions 151-164 may comprise processes implemented on one or more computing devices. The network functions 151-164 may communicate with each other via any type of communication link, such as an IP-based communication link, a virtual network link, a logical connection, etc. The network functions 151-164 described herein may have similar meanings as those specified by 3GPP (e.g., in 3GPP Technical Specification 23.501 version 15.2.0 Release 15). The core network 105 may include additional or alternative network functions, for example, in order to provide wireless communication between the user device 101 and the data network 107 (e.g., the Internet).

A network (e.g., the communication network 100) or a portion thereof may be sliced into a plurality of virtual networks, which may run on the same physical infrastructure of the network (e.g., an underlying physical 5G infrastructure). A network slice (e.g., a virtual network of the plurality of virtual networks) may include, for example, a radio access network, network functions of a core network, etc. Resources (e.g., computing devices, storage devices, networking devices, and other physical computing resources) of the physical infrastructure may be assigned to a network slice to implement the radio access network and/or network functions of the core network, for example, using Network Function Virtualization (NFV). A network slice may be configured to provide specific network functions, such as network functions 151-164, and/or may be customized for the user(s) in the network slice.

Various types of network slices may be established for different purposes. For example, an enhanced mobile broadband (eMBB) type network slice may be suitable for handling 5G enhanced mobile broadband traffic, such as augmented reality (AR) or virtual reality (VR) application and/or service traffic. A massive Internet of Things (MIoT) type network slice may be suitable for handling Internet of Things traffic. An ultra-reliable low latency communications (URLLC) type network slice may be suitable for handling ultra-reliable low latency communications, such as vehicle-to-everything (V2X) communications. Additionally or alternatively, a network slice may be associated with different performance parameters, such as bandwidth, transmission latency, traffic security, etc. A network slice may be associated with one or more levels of QoS.

The user device 101 may communicate with the data network service servers 109A, 109B via one or more network slices. To communicate via a network slice, the user device 101 may establish, in the network slice, one or more packet data unit (PDU) sessions. A PDU session may comprise an association between a user device and a data network that provides a connectivity service or a data service. The user device 101 may indicate the S-NSSAI of the network slice to the AMF 151 and/or the SMF 153 during a procedure for establishing a PDU session. The procedure for establishing a PDU session may create or otherwise configure a PDU session in the network slice. A PDU session may be associated with different levels of QoS, and/or may be connected to different types of data networks (e.g., an IP network, a non-IP network, the Ethernet, etc.).

The user device 101 may run and/or have installed various applications and/or services. The applications and/or services 321A-321C may be, for example, an augmented reality application or augmented reality service; a vehicle-to-everything application or a vehicle-to-everything service, and/or other types of applications and/or services. The applications and/or services may be, via the various networks of FIG. 1, in communication with an application or service server 109A, 109B. The applications and/or services may, via the various networks of FIG. 1, transmit and/or receive different types of traffic. For example, an augmented reality service or a virtual reality service may transmit and/or receive enhanced mobile broadband traffic. A thermostat service may generate Internet of Things traffic. A vehicle-to-everything service may generate ultra-reliable low latency traffic. The following table provides a few non-limiting examples of the types of data that a user device may send or receive via the various networks of FIG. 1. The table, for each example type of data, indicates a number of example network conditions (e.g., throughput, latency, etc.) that may allow for adequate performance for the example type of data. The downlink (DL) may indicate data being sent to the user device 101. The uplink (UL) may indicate data being sent from the user device 101.

**TABLE I**

| **Example Type of Data** | **DL throughput in megabits per second (mbps)** | **UL throughput in mbps** | **Latency in milliseconds** | **Reliability** | **Mobility** |
|---|---|---|---|---|---|
| Data for virtual reality | 50 | 10 | 50 | Medium high | Low |
| Data for video gaming | 10 | 10 | 50 | Medium high | Low |
| Data for interactive augmented reality | 10 | 10 | 100 | Medium high | Low |
| Data for medical services | 100 | 100 | 150 | High | Low |
| Data for an education service | 100 | 100 | 150 | High | Low |
| Data for non-interactive augmented reality | 10 | 1 | 100 | High | Low |
| Data for a public safety service | 100 | 50 | 15 | high | Low |
| Data for a remote-controlled drone or vehicle | 1 | 100 | 50 | Very high | Medium |
| Data for automated driving | 5 | 5 | 50 | Very high | High |
| Data for remote vehicle control and/or driving | 1 | 50 | 50 | Very high | High |
| Data for collision avoidance | 5 | 5 | 15 | Very high | High |
| Data for vehicle platooning | 1 | 1 | 50 | Very high | High |
| Data for emergency breaking of vehicle platooning | 0.1 | 0.1 | 15 | Very high | High |
| Data for video recorded in vehicle | 50 | 50 | 200 | Very high | High |
| Data for content displayed in vehicle | 50 | 5 | 100 | High | High |
| Data for a vehicle to pedestrian communication service | 10 | 10 | 100 | Very High | Low |
| Data for real-time navigation | 50 | 0.1 | 1000 | Very high | High |
| Data for public transport management service | 1 | 0.01 | 1000 | High | Low |

The core network 105 includes APPQM 163 and QMF 164, and these network functions may be configured to cause a PDU session to be associated with a level of QoS based on information received from an application or service server 109A, 109B. As shown in FIG. 1, the APPQM 163 may be implemented on a computing device or other computing resource that also implements the PCF 158. The QMF 164 may be implemented on a computing device or other computing resource that also implements the NEF 156.

The QMF 164 may be configured to communicate with an application or service server 109A, 109B. The communication between QMF 164 and an application or service server 109A, 109B may be based on an applications programming interface (API) that enables the application or service server 109A, 109B to, for example, provide information usable to configure levels of QoS for a PDU session. The API may allow for the application or service server 109A, 109B to send QoS information to the QMF 164. Based on the QoS information, the QMF 164 may generate and/or store a QoS profile. The QoS profile may, for a particular application or service, include information indicating one or more types of data that will be transported over the various networks of FIG. 1; information indicating one or more levels of QoS that can be associated with the one or more types of data; and information indicating how to charge, or bill, for the types of data and/or the one or more levels of QoS. The API may allow for the QMF 164 to send charging information to the application or service server 109A, 109B. Based on the charging information, the application or service server 109A, 109B may generate the QoS information. More details regarding the communication between the QMF 164 and the application or service server 109A, 109B, the QoS information, the QoS profile, and the charging information is provided below.

The QMF 164 may be configured to determine whether a QoS profile is associated with a PDU session that was established for the user device 101. Based on this determination, the QMF 164 may cause the QoS profile that is associated with the PDU session to be sent to the user device 101. Based on receipt of the QoS profile, the user device 101 may determine a level of QoS to associate with the PDU session. The level of QoS may that was determined by the user device 101 may have been one of the levels of QoS indicated by the QoS profile. For example, the user device 101 may determine a source or destination address for the application or service. The source or destination address may be associated with one of the types of data that will be transported for the PDU session (e.g., the source address may associated with real-time video data). The user device 101 may analyze the QoS profile for levels of QoS associated with the source or destination address. The user device 101 may, from the levels of QoS associated with the source or destination address, select one of the levels of QoS. The QoS profile may include additional information that is used as a basis for selecting one of the levels of QoS. The user device 101 may cause an indication of the level of QoS to be sent to the QMF 164. Based on receipt of the indication of the level of QoS, the QMF 164 may be configured to determine a request to modify a PDU session. The request to modify a PDU session may cause performance of a procedure for modifying the PDU session to implement, or otherwise support, the level of QoS. For example, if the level of QoS is identified by a particular QFI, the procedure for modifying the PDU session may configure the PDU session to transport data that includes a particular QFI according to a particular QoS flow. Further details regarding the selection of levels of QoS and the configuration of a PDU session is provided below.

The APPQM 163 may be configured to communicate with the QMF 164 and/or to act as an interface between the QMF 164 and various devices or network functions of the network. For example, the APPQM 163 may be configured to receive a QoS profile from the QMF 164 and forward the QoS profile for transport to the user device 101. The APPQM 163 may be configured to receive an indication of a level of QoS that was determined by the user device 101 and forward the indication of the level of QoS to the QMF 164. The APPQM 163 may be configured to receive, from the QMF 164, a request to modify a PDU session and may initiate a procedure for modifying the PDU session. Further details regarding the APPQM 163 will be provided below.

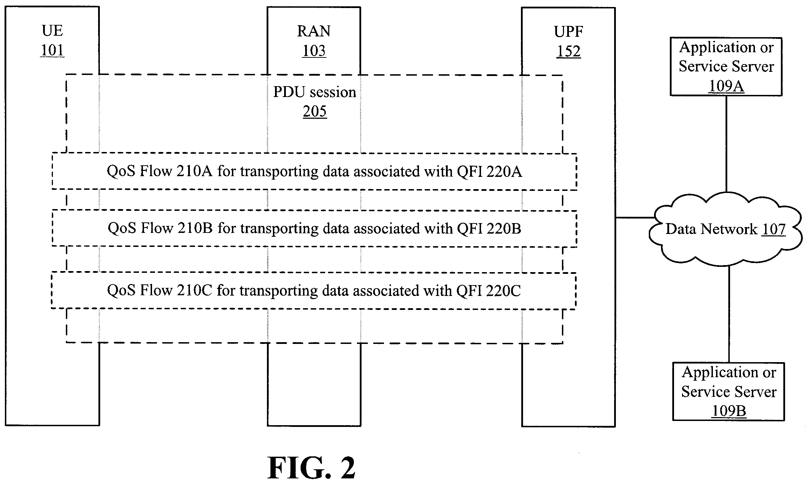

As discussed above, there are many ways in which network technologies associate data with a level of QoS. In a 4G radio access network, a QoS Class Identifier (QCI) may be used to associate data with a level of QoS. In a 5G radio access network a QoS flow identifier (QFI) may be used to associate data with a level of QoS. For simplicity, the examples of FIGs. 2-5 will be discussed in terms of a QoS flow identifier (QFI) and a QoS flow.

FIG. 2 shows a schematic diagram of an example PDU session that is associated with one or more QoS flows. As shown in FIG. 2, a PDU session 205 may be established between the UPF 152 and the user device 101 and may be for the transport of data between the user device 101 and an application or service server 109A, 109B. The PDU session 205 may include one or more QoS flows including, for example, QoS flow 210A, QoS flow 210B, and QoS flow 210C. Each QoS flow 210A, 210B, 210C may be configured to provide a particular level of QoS for the PDU session 205. For example, QoS flow 210A may allow for high throughput and high latency; QoS flow 210B may allow for low latency and low throughput; and QoS flow 210C may allow for high throughput and low latency. QoS flow 210A may be associated with QFI 220A. QoS flow 210B may be associated with QFI 220B. QoS flow 210C may be associated with QFI 220C. Each QFI 220A, 220B, 220C may have a value different from each other. Further, the values for the QFI 220A, 220B, 220C may be unique for the PDU session 205. Data that includes or is otherwise associated with a particular QFI may, based on being transported based on the associated QoS flow, be provided with the same processing and forwarding treatments (e.g., scheduling, admission threshold). In this way, by associating different types of data with different QFI, the different types of data may be transported, for the PDU session 205, according to different levels of QoS.

One manner of associating data with a QFI is to encapsulate the data with an encapsulation header that includes the QFI. By including the QFI within an encapsulation header, any header and/or payload of the data to be transported may be unchanged (e.g., an IP packet that is to be transported from the application or service server 109A and to the user device 101 may be unchanged). For example, if the user device 101 intends to send an IP packet to the application or service server 109A, 109B, the user device 101 may encapsulate the IP packet with an encapsulation header. The encapsulation header may include a QFI, such as QFI 220A. The user device 101 may send the encapsulated IP packet via the RAN 103 to the UPF 152. The encapsulated IP packet may, based on the inclusion of the QFI 220A, be transported between the client device 101 and the UPF 152 according to QoS flow 210A (e.g., transported for high throughput and high latency). The UPF 152 may receive the encapsulated IP packet, may remove the encapsulation header, and may forward the IP packet, via the data network 107, to the application or service server 109A, 109B. If the UPF 152 receives, from the application or service server 109A, 109B, a User Datagram Protocol (UDP) packet for transport to the user device 101, the UPF 152 may encapsulate an encapsulation header onto the UDP packet and forward the resulting encapsulated UDP packet to the user device via the RAN 103. The encapsulation header for the UDP packet may include QFI 220C. The encapsulated UDP packet may, based on the inclusion of the QFI 220C, be transported between the UPF 152 and the user device 101 according to QoS flow 230C (e.g., transported for high throughput and low latency). The IP packet and UDP packet are just two examples of the underlying data that may be encapsulated and transported over the network. Additional examples of the underlying data include a protocol data unit (PDU) and/or an Ethernet frame.

The QoS flows and QFI of a PDU session may be similar to the flows and indicators described in a version of TS 23.501 published by 3GPP. The following table provides some non-limiting examples of QFI values, associated examples of QoS flow characteristics, and associated examples of application or services that may be suitable for the associated QoS flow characteristics.

**TABLE II**

| **Example QFI Values** | **Examples QoS Flow Characteristics** | | | | **Example Applications or Services** |
|---|---|---|---|---|---|
| | **Priority Level** | **Packet Delay Budget (in milliseconds)** | **Packet Error Rate** | **Maximum Data Burst Volume** | |
| B | 11 | 5 | 10⁻⁵ | 160 Bytes | Data for remote control |
| C | 12 | 10 | 10⁻⁶ | 320 Bytes | Data for intelligent transport systems |
| 1 | 20 | 100 | 10⁻² | N/A | Data for real-time voice |
| 2 | 40 | 150 | 10⁻³ | N/A | Data for real-time streaming video |
| 3 | 30 | 50 | 10⁻³ | N/A | Data for real-time gaming |
| | | | | | Data for vehicle to everything messaging |
| 4 | 50 | 50 | 10⁻⁶ | N/A | Data for buffered and streaming video |

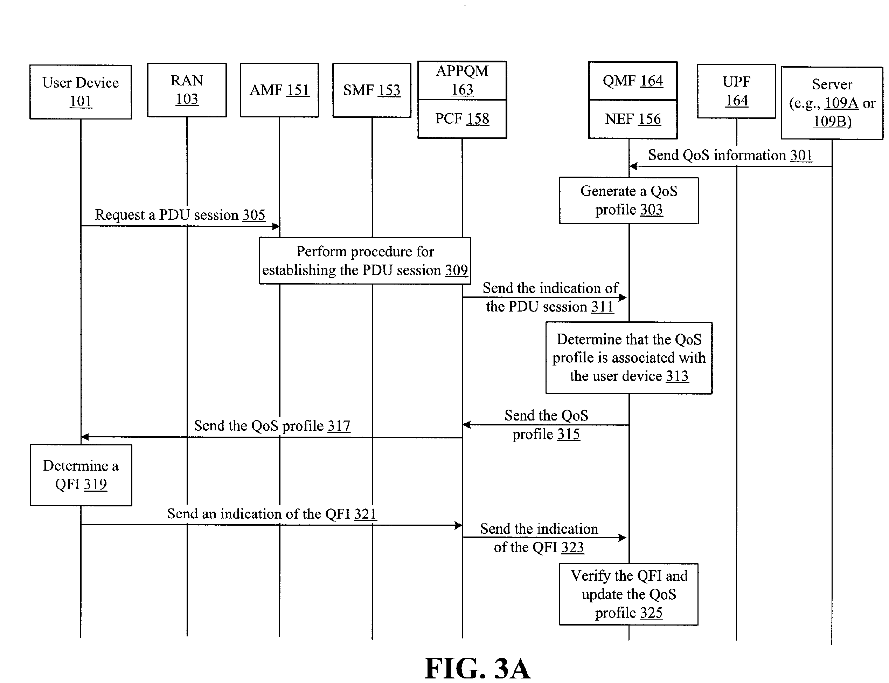

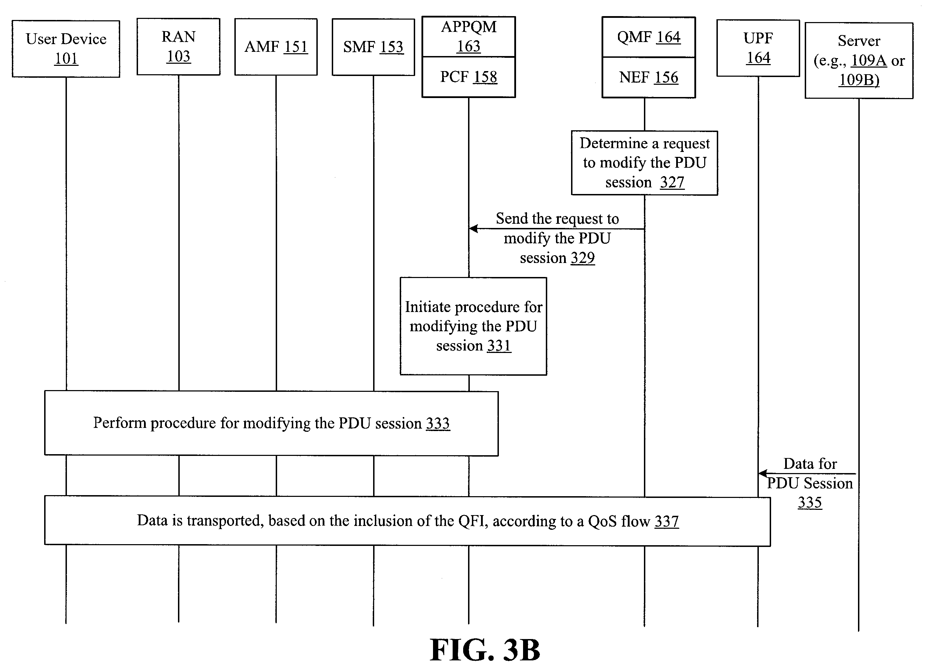

FIGs. 3A and 3B show one or more example process sequences for configuring a PDU session and transporting data according to one or more levels of QoS. In particular, the one or more example process sequences of FIGs. 3A and 3B provide an example involving, among other things, a PDU session, a QoS profile based on information received from an application or service server, a QFI corresponding to a level of QoS, and a QoS flow.

The one or more example process sequences begin at 301 where the application or service server (e.g., 109A or 109B) may send QoS information to the QMF 164. The application or service server may send the QoS information based on the application or service becoming available to user devices and/or based on an update to the application or service. The application or service server may send the QoS information based on determining that a current QFI has not met performance thresholds (e.g., latency has increased beyond a threshold). The application or service server may send the QoS information based on a change in charging rates (e.g., a charging rate for a current QFI has changed to be above a threshold and/or the entity that is being charged for the usage has changed).

The QoS information may be associated with a particular application or service (e.g., video service, IoT application), and the QoS information may include an identifier of the particular application or service. The QoS information may include indications, or rules, that associate the particular application or service with one or more QFIs. The indications, or rules, may associate the one or more QFIs with identifiers for the types of data to be transported. The indications, or rules, may associate the one or more QFIs with criteria for when the one or more QFIs may be used. The indications, or rules, may associate the one or more QFIs with charging information indicating which entity (e.g., provider of the application or server, or the user of the user equipment) is to be charged or billed for the network usage. The following table provides an example of the QoS information. As illustrated, the QoS information may include one or more entries for a QFI and each entry for a QFI may be differentiated by an identifier for a type of data and/or the criteria for when the one or more QFIs may be used. Additionally and as illustrated, if the identifier for the type of data and the criteria are associated with multiple QFI, an indication of a priority level for each of the multiple QFI may be included.

**TABLE III**

| **Example Application or Service** | **Example QFI** | **Example Identifiers For Types of Data** | **Example Criteria** | **Example Charging Information** |
|---|---|---|---|---|
| Identifier for a virtual reality service | QFI #Y | A first source address or a first destination address | An indication that a user device is associated with a premium service level | An indication that usage is charged to the provider of the application or service server |
| Identifier for a virtual reality service | QFI #Y | The first source address or the first destination address | An indication that the user device is associated with a normal service level | An indication that usage is charged to the user of the user device |
| | | | An indication of a priority level for QFI #Y | |
| Identifier for a virtual reality service | QFI #U | The first source address or the first destination address | An indication that a the user or the user device is associated with a normal service level | An indication that usage is charged to the provider of the application or service server |
| | | | An indication of a priority level for QFI #U | |
| Identifier for a virtual reality service | QFI #X | A second source address or a second destination address | An indication of a time or range of times within a day, such as 9 AM to 5 PM | An indication that usage is charged to the user of the user device |
| | | | An indication of a priority level for QFI #X | |
| Identifier for a virtual reality service | QFI #Z | The second source address or the second destination address | An indication of a time or range of times within a day, such as 9 AM to 5 PM. | An indication that usage is charged to the user of the user device |
| | | | An indication of a priority level for QFI #Y | |
| Identifier for a virtual reality service | QFI #D | The second source address or the second destination address | An indication of a time or range of times within a day, such as 5 PM to 9 AM | An indication that usage is charged to the user of the user device |
| | | | An indication of a priority level for QFI #D | |
| Identifier for a virtual reality service | QFI #E | The second source address or the second destination address | An indication of a time or range of times within a day, such as 5 PM to 9 AM | An indication that usage is charged to the user of the user device |
| | | | An indication of a priority level for QFI #E | |

In the above example, a number of QFIs for a virtual reality service are associated with types of data, criteria for when the QFIs are to apply, priority levels for the QFIs, and indications of charging information. The QFIs are given a label (e.g., QFI #D, #E, #U, #X, #Y, and #Z) to indicate that each QFI has a value different from the other QFIs. The QFIs of Table III may have values and priority levels similar to those described above in connection with Table II.

In the example, QFIs #U and #Y are associated with a first data type indicated by the first source address or the first destination address. QFIs #D, #E, #X, and #Z are associated with a second data type indicated by the second source address or the second destination address. These source/destination addresses may be used when the user device, application, or service is sending data of that data type (e.g., an IP packet with a payload of the first data type may include the first source address or the first destination address). Source addresses and/or destination addresses are only one example of the types of identifiers that could be used to differentiate the types of data. Other identifiers for differentiating the types of data could be used in place of or in addition to the source address and/or the destination address.

In the example, QFIs #U and #Y are associated with criteria indicating that usage of the QFI #U and #Y is based on a service level associated with the user (e.g., whether a service level is premium or normal). The service level may be found in a user profile stored by UDM 159. QFIs #U and #Y, for the normal service level, are also associated with a priority level. The priority levels for QFI #U and #Y may indicate that QFI #U has a higher priority level than QFI #Y. A higher priority level may indicate that the QFI will be selected over QFIs having a lower priority level if the higher priority level is otherwise available. In the example, QFIs #D, #E, #X, and #Z are associated with criteria indicating that usage of the QFI #D, #E, #X, and #Z is based on a time of day or a range of times within a day. The service levels, time of day or range of times within a day, and the priority levels of the above example are only some of the possible criteria that could be included in QoS information. Other criteria include, for example, a current location of the user device; thresholds of data throughput; thresholds of latency; thresholds of charging rates; sets of key performance indicators (KPIs); media type (e.g., video, audio); other information associated with a user profile saved by UDM 159 (e.g., indications on whether the user is able to access certain services such as Internet-of-things services, video services, voice services); and the like. For example, the QoS information may include criteria based on the examples of Table I, such as the DL throughput, the UL throughput, the latency, the reliability, and/or the mobility.

The one or more example process sequences continue at 303 where the QMF 164 may generate a QoS profile. The QoS profile may be based on the QoS information received from the application or service server. For example, the QoS profile may include some or all of the QoS information (e.g., the QoS profile may include a copy of the example QoS information of Table III).

The QoS profile may include additional data fields not found in the QoS information or may supplement the data of the QoS information. For example, the QoS profile may include a data field for an indication of one or more QFIs that is currently in use for the PDU session. For example, the QoS profile may include data fields for a QFI not found within the QoS information (e.g., a new QFI may be included in the QoS profile based on a rule defined by a provider of the core network 105). For example, the QoS profile may include a data field with an identifier of the application or service server (e.g., a network address of the application or service server). For example, the QoS profile may supplement or replace the identifiers for the types of data from the QoS information (e.g., the first and second source/destination addresses of Table III). The identifiers for the types of data may be determined based on the QFI of the QoS information. To determine the types of data, the QMF 164 may process a QFI based on a filter that maps the QFI to one or more sources addresses, destination addresses, transport protocols (e.g., IP protocol), ports, or the like. These identifiers for the types of data (e.g., source address, destination address, transport protocol, port) may be included in the QoS profile for the QFI. For example, the QMF 164 may, for each QFI of the QoS information, add charging rate information or replace the charging rate information of the QoS information with current charging rate information. The QMF 164 may add, for a QFI, an indication as to whether usage of the QFI is to be charged or is to be free. The QMF may add an indication, for a QFI, of the charging rate for the QFI. The QMF 164 may add an indication, for a QFI, of an entity that is charged for the usage of the QFI. These additional indications, or rules, may be formatted similar to the indications, or rules, of the QoS information. The QoS profile may be stored for later access.

At 305, the user device 101 may send a request for a PDU session. The request for the PDU session may be sent to the AMF 151. The request for the PDU session may include information indicating one or more requirements of the PDU session. For example, the information may indicate the application or service for the PDU session, such as whether an application or service for 5G enhanced mobile broadband, an application or service for virtual reality, an application or service for massive IoT communications, or any other type of application or service (e.g., any of the example applications or services of Table I). The information may indicate, among other things, one or more S-NSSAIs for a network slice, a data network name usable to select an SMF and/or a UPS for a PDU session, and a PDU session type.

At 309, one or more network functions of the core network (e.g., AMF 151, SMF 153, and PCF 158) may perform a procedure for establishing the PDU session. The procedure, for example, may be to establish a new PDU session, to activate an existing PDU session, to switch between PDU sessions, or to handover to the PDU session. The procedure may result in the APPQM 163 receiving an indication of the PDU session. The procedure for establishing the PDU session may be performed similar to a version of TS 23.502 published by 3GPP.

At 311, the APPQM 163 may send, or forward, the indication of the PDU session to the QMF 164. The indication of the PDU session may include an identifier of the user device 101, one or more identifiers for the type of data to be transported by the PDU session (e.g., one or more source addresses, one or more destination address, one or more transport protocols, one or more ports, or the like), and an identifier for the PDU session.

At 313, the QMF 164 may determine that the QoS profile is associated with the user device 101. This determination may be based on a comparison of the one or more identifiers for the types of data to be transported by the PDU session (as included in the indication of the PDU session that was sent from the APPQM 163 at 311) and any identifiers for the types of data in the QoS profile. If a match is found (e.g., a source address or destination address included in the indication of the PDU session matches a source address or destination address included in the QoS profile), the QMF 164 may determine that the QoS profile is associated with the user device 101. The QMF 164 may perform this determination on other conditions, including, for example, whether the QoS profile and the network conditions indicate whether there is a need to have the user device 101 determine a QFI. For example, if the QoS profile includes the entries of the example QoS information of Table III, the QMF 164 may, based on those entries, determine that usage of at least one QFI in the QoS profile is charged to the user device or the application or service server. Based on determining that usage of at least one QFI in the QoS profile is charged to the user device or the application or service server, the QMF 164 may determine that the QoS profile is associated with the user device 101.

At 315, the QMF 164 may send the QoS profile to the APPQM 163. The QoS profile may be sent based on determining that the QoS profile is associated with the user device 101. At 317, the APPQM 163 may forward, or otherwise send, the QoS profile to the user device 101. The forwarding or sending of the QoS profile may include additional network functions. For example, the APPQM 163 may forward the QoS profile to the SMF 153, which in turn may forward the QoS profile to the AMF 151. The AMF 151 may forward the QoS profile to the RAN 103. The RAN 103 may deliver the QoS profile to the user device 101.

At 319, the user device 101 may determine a QFI. This determination may be based on the QoS profile. For example, the user device 101 may locate one or more entries from the QoS profile that are associated with the application or service and/or a type of data to be transported (e.g., by locating entries that match a source address or destination address for the type of data). As one example, if the QoS profile includes the entries of the QoS information of Table III, the user device 101 may, based on the type of data having the first source address or the first destination address, identify entries for QFI #U and #Y. Based on the entries for QFI #U and #Y, the user device 101 may select one of QFI #U and #Y. The selection may be based on the criteria associated with the entries for QFI #U and #Y (e.g., based on the service level, and the priority levels). For example, if the user device 101 is associated with a normal service level and based on the priority levels of the QFIs, the user device 101 may select QFI #U. If the user device 101 is associated with a premium service level, the user device 101 may select QFI #Y. The selection may be based on the charging information associated with the entries for QFI #U and #Y. For example, the user device 101 may select QFI #Y or QFI #U based on whether the usage is charged to the user of the user device or to the provider of the application or service server.

As part of the determination of a QFI, the user device 101 may further analyze a selected QFI based on a desired network performance. For example, the user device 101 may determine that the QFI is insufficient to meeting one or more performance thresholds (e.g., throughput associated with the QFI is less a desired throughput, a latency associated with the QFI is more than a desired throughput). Based on determining that the QFI is insufficient, the user device 101 may reselect a QFI that satisfies the one or more performance thresholds (e.g., the user device may select QFI #U after determining that QFI #Y is insufficient. The reselected QFI may be one of the QFI indicated in the QoS profile, or may be a QFI that is not indicated in the QoS profile. In this way, the user device 101 may, by determining a QFI based on reselection, the user device 101 may perform a request for the reselected QFI.

At 321, the user device 101 may send an indication of the QFI, which was determined at 319. The indication of the QFI may be forwarded or otherwise sent, via the RAN 103 and via various network functions of the network (e.g., AMF 151 and SMF 153), to the APPQM 163. At 323, the APPQM 163 may forward or otherwise send the indication of the QFI to the QMF 164.

At 325, the QMF 164 may verify the QFI and update the QoS profile. The verification of the QFI may be based on a comparison of the QFI and the QoS profile. If the verification passes, the QFI may be accepted and the QoS profile may be updated to indicate that the QFI will be in use for the PDU session. If the verification fails, the QMF 164 may apply a set of policy rules to select a different QFI based on the QoS profile, and the QoS profile may be updated to indicate that the different QFI will be in use for the PDU session. Continuing the example of 319, the QMF 164 may verify that QFI #Y, based on the QoS profile, is available for use by the user device based on any information or criteria in the QoS profile. The QMF 164 may verify that there is sufficient network capacity to support the QFI #Y. If the verification passes, the QoS profile may be updated to indicate that QFI #Y will be in use for the PDU session. If the verification fails, the QMF 164 may select a different QFI (e.g., QFI #U) and may update the QoS profile to indicate that QFI #U will be in use for the PDU session. If the user device 101 reselected QFI #U after determining that QFI #Y was insufficient, the QMF 164 may verify that there is sufficient network capacity to support the QFI #U. If the verification passes, the QoS profile may be updated to indicate that QFI #U will be in use for the PDU session. If the verification fails, the QMF 164 may select a different QFI (e.g., QFI #Y) and may update the QoS profile to indicate that QFI #Y will be in use for the PDU session.

At 327, the QMF 164 may determine a request to modify the PDU session. The request to modify the PDU session may include an indication of the QFI that will be in use for the PDU session (e.g., QFI #Y if the verification passed, QFI #U if the verification failed).

At 329, the QMF 164 may send the request to modify the PDU session. The request may be sent to the APPQM 163. At 331, the APPQM 163 may initiate a procedure for modifying the PDU session. This initiation may be based on the request set at 329. At 333, the procedure for modifying the PDU session may be performed. The procedure may result in the QFI being in use for the PDU session. The procedure may be performed similar to a version of TS 23.502 published by 3GPP.

Based on the modification to the PDU session, the QFI may be used to transport data over the network in a QFI flow. For example, at 335, the application or service server may send data for the PDU session. The data may be for an application or service (e.g., any of the example applications or services of Table I). The data may be sent to the UPF 164. Based on receipt of the data by the UPF 164, at 337, the data may be transported, via a QoS flow, based on the QFI. The manner in which the data is processed and/or transported may be similar to the manner described in FIG. 2. For example, the UPF 164 may encapsulate the data with an encapsulation header that includes the QFI (e.g., QFI 230B) the encapsulated data may be transported to the user device 101 via the RAN 103 according to the QoS flow (e.g., QoS flow 220B) associated with the QFI.

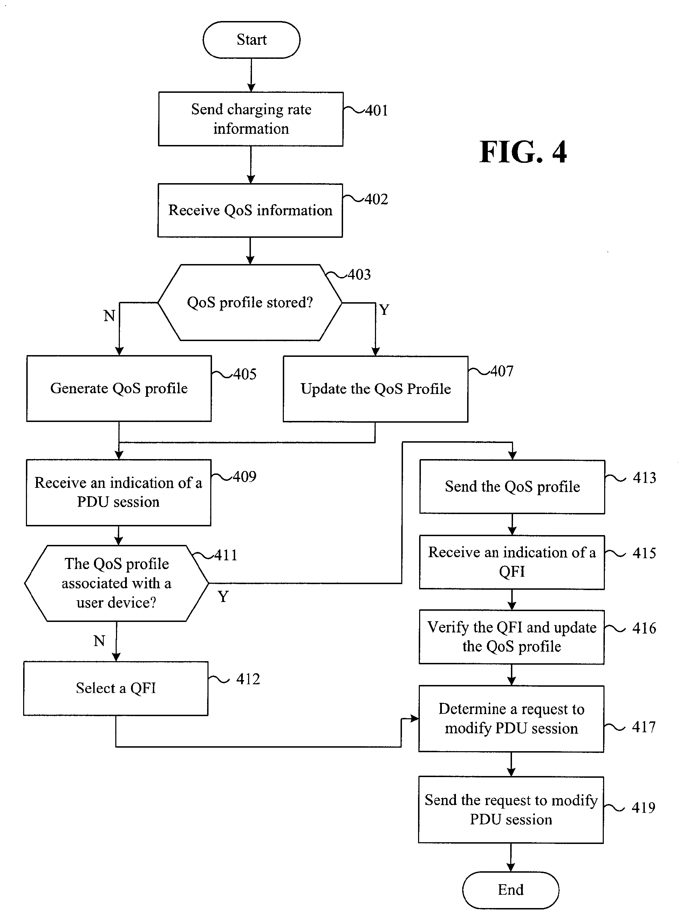

FIG. 4 shows one or more example methods for interfacing between one or more network resources and a server of an application or service to enable the configuration of a PDU session. In particular, the one or more example methods of FIG. 4 is suitable for use by a computing device configured to operate as the QMF 164.

At step 401, a computing device may send charging rate information. The charging rate information may be sent to an application or service server (e.g., 109A, 109B). The application or service server may have previously sent a request for the charging rate information (not shown) to the computing device and the charging rate information may be sent as a response to the request.

The charging rate information may include one or more indications of the current charging rates of the network. For example, the charging rate information may include, for each QFI supported by the network, a current charging rate. The charging rate information may include, for each QFI available for use by the application or service server, a current charging rate. The application or service server may use the charging rate information as a basis for determining the QoS information (e.g., QFI with cheaper charging rates may be prioritized over QFI with lower charging rates). The computing device may receive the current charging rates from a charging domain function of the network (e.g., CDF 162).

At step 402, the computing device receives QoS information. The QoS information is received from an application or service server (e.g., 109A, 109B). Table III, and the associated discussion in connection with 301 of FIG. 3A, provides an example of the QoS information.

At step 403, the computing device may determine whether a QoS profile is stored. For example, the QoS profiles may be searched for a match to an identifier of the application or service server (e.g., a network address of the application or service server). If a match is found, the method may proceed to step 407. If no match is found, the method may proceed to step 405.

At step 405, the computing device generates a QoS profile. The generation is performed based on the QoS information. For example, the generation of the QoS profile may be performed similar to the discussion above in connection with 303 of FIG. 3A. For example, the QoS profile may include some or all of the QoS information, and may include additional information, such as an indication of one or more associated user devices. After generating the QoS profile, the QoS profile may be stored for later access.

At step 407, the computing device may update a QoS profile. The update may be based on which QoS profile was found to match the identifier of the application or service. The update may be based on the QoS information. The QoS profile may be updated to reflect any changes between the stored data of the QoS profile and the QoS information. This may include adding or deleting, from the QoS profile, entries associated with one or more QFIs. For example, if the QoS information includes a new or an updated entry for a QFI, the QoS profile may be updated to include the new or updated entry.

At step 409, the computing device may receive an indication of a PDU session. The indication of the PDU session may be received from an APPQM 163 of the network and, similar to 311 of FIG. 3A, may have been received based on a user device requesting the PDU session and/or based on the network establishing the PDU session. The indication of the PDU session may include an identifier of the user device, an identifier of the application or service for the PDU session, and an identifier for the PDU session.

At step 411, the computing device determines whether the QoS profile is associated with a user device. This determination may be performed based on the indication of the PDU session and this determination may be performed similar to the discussion above in connection with 313 of FIG. 3A. For example, this determination may be performed based on comparing information from the indication of the PDU session (e.g., the identifier of the user device, the identifier of the application or service for the PDU session, or the identifier for the PDU session) to information of a QoS profile. If a match is found, the QMF 164 may determine that the QoS profile is associated with the user device. The computing device may also perform this determination based on other criteria or information of a QoS profile. For example, based on determining that usage of at least one QFI in the QoS profile is charged to the user device or the application or service server (e.g., at least one QFI is not free of charge), the computing device may determine that the QoS profile is associated with the user device. If the computing device determines that the QoS profile is associated with a user device, the method may proceed to step 413. If the computing device determines that the QoS profile is not associated with a user device, the method may proceed to 412.

At 412, the computing device may select a QFI based on the QoS profile. For example, the computing device, without communicating with the user device, may use the QoS profile as a basis for selecting which QFIs are used for the PDU session. For example, where all QFI are free of charge, the computing device may, based on the QoS profile, select a QFI for use with the PDU session. The computing device may select a QFI based on current network conditions (e.g., to maximize overall bandwidth usage of the network). To perform the selection, the computing device may communicate with one or more network functions of the network. Additionally, based on the selection, the computing device may update the QoS profile to indicate that the selected QFI will be in use for the PDU session the method may then proceed to step 417.

At step 413, the computing device sends the QoS profile that was determined to be associated with the user device. The QoS profile may be sent to the APPQM of the network and may cause the APPQM to forward the QoS profile, via the RAN and/or other network functions, to the user device. The sending of the QoS profile may be performed similar to 315 of FIG. 3A.

At step 415, the computing device receives an indication of a QFI. The indication of the QFI may be received from the APPQM 163. The indication of the QFI may be based on a user device determining, based on the QoS profile, the QFI. The user device may have determined the QFI similar to the discussion associated with 315 of FIG. 3A.

At step 416, the computing device may verify the QFI and update the QoS profile. The verification may be performed based on the indication of the QFI. The update to the QoS profile may be performed based on the result of the verification. The verification and the update may be performed similar to the discussion associated with 325 of FIG. 3A. For example, the verification of the QFI may be based on a comparison of the QFI and the QoS profile. If the verification passes, the QFI may be accepted and the QoS profile may be updated to indicate that the QFI will be in use for the PDU session. If the verification fails, the computing device may apply a set of policy rules to select a different QFI based on the QoS profile, and the QoS profile may be updated to indicate that the different QFI will be in use for the PDU session.

At step 417, the computing device determines request to modify the PDU session. The request to modify a PDU session may indicate the QFI that will be in use for the PDU session (e.g., the QFI that was verified at step 416, the reselected QFI of step 416, or the selected QFI of step 412). The request may be determined similar to the discussion at 327 of FIG. 3B.

At step 419, the computing device sends the request to modify the PDU session. The request may be sent to the APPQM of the network. The APPQM may, in turn, initiate a procedure for modifying the PDU session. The sending and initiation may be performed similar to 329 and 331, respectively, of FIG. 3B. The procedure for modifying the PDU session may be performed similar to the discussion associated with 333 of FIG. 3B. Based on the modification to the PDU session, the GFI may be used to transport data over the network in a QFI flow. An example of data being transported over the network in a QFI flow is provided in the discussion of 335 and 337 of FIG. 3B.

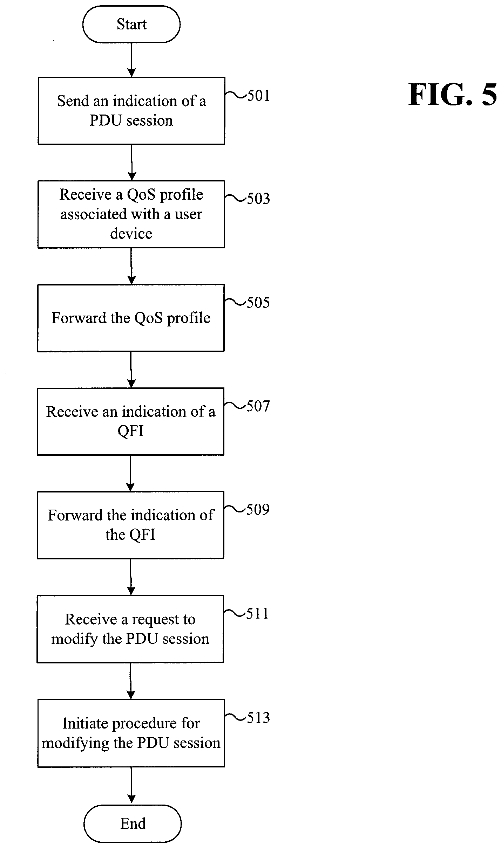

FIG. 5 shows one or more example methods for interfacing between two or more network resources to enable the configuration of a PDU session. In particular, the one or more example methods of FIG. 5 may be suitable for use by a computing device configured to operate as the APPQM 163.

At step 501, a computing device may send an indication of a PDU session. The indication of the PDU session may have been received based on the PDU being established. Based on receiving the indication of the PDU session, the computing device may forward, or otherwise send, the indication of the PDU session to the QMF of the network. The sending of the indication of the PDU session may be performed similar to the discussion associated with 311 of FIG. 3A.

At step 503, the computing device may receive a QoS profile associated with a user device. The QoS profile may have been sent by the QMF of the network after determining that the QoS profile is associated with the user device. The receiving of the QoS profile may be performed similar to the discussion associated with 315 of FIG. 3A.

At step 505, the computing device may forward, or otherwise send, the QoS profile. The forwarding, or sending, of the QoS profile may be performed similar to the discussion associated with 317 of FIG. 3A.

At step 507, the computing device may receive an indication of a QFI. The indication of the QFI may be received based on a user device determining, based on the QoS profile, a QFI. The receiving of the indication of the QFI may be performed similar to the discussion associated with 321 of FIG. 3A.

At step 509, the computing device may forward, or otherwise send, the indication of the QFI. The forwarding, or sending, of the indication of the QFI may be performed similar to the discussion associated with 323 of FIG. 3A.

At step 511, the computing device may receive a request to modify the PDU session. The receiving of the request to modify the PDU session may be performed similar to the discussion associated with 329 of FIG. 3B.

At step 513, the computing device may initiate a procedure for modifying the PDU session. The initiation may be performed similar to the discussion associated with 331 of FIG. 3B. The procedure for modifying the PDU session may be performed similar to the discussion associated with 333 of FIG. 3B. Based on the modification to the PDU session, the GFI may be used to transport data over the network in a QFI flow. An example of data being transported over the network in a QFI flow is provided in the discussion of 335 and 337 of FIG. 3B.

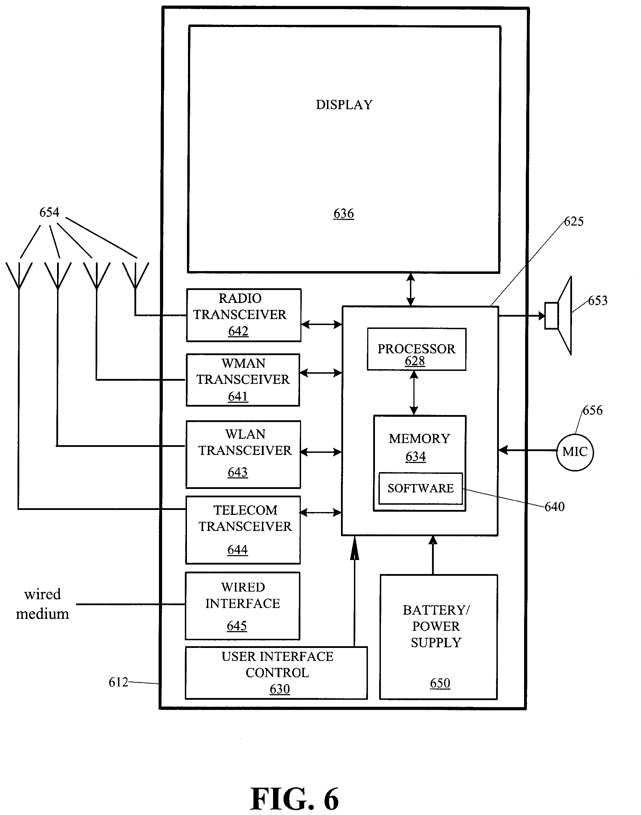

FIG. 6 illustrates an example apparatus, in particular a computing device 612, that may be used in a communication network such as the one shown in FIG. 1, to implement any or all of the user device 101, the radio access network 103, the core network 105, the data network service servers 109A-109B, and/or other computing devices to perform the steps described above and in FIGS. 3A, 3B, 4, and 5. Computing device 612 may include a controller 625. The controller 625 may be connected to a user interface control 630, display 636 and/or other elements as shown. Controller 625 may include circuitry, such as for example one or more processors 628 and one or more memory 634 storing software 640 (e.g., computer executable instructions). The software 640 may comprise, for example, one or more of the following software options: user interface software, server software, etc., including a radio protocol stack, the network functions 151-162, etc.

Device 612 may also include a battery 650 or other power supply device, speaker 653, and one or more antennae 654. Device 612 may include user interface circuitry, such as user interface control 630. User interface control 630 may include controllers or adapters, and other circuitry, configured to receive input from or provide output to a keypad, touch screen, voice interface - for example via microphone 656, function keys, joystick, data glove, mouse and the like. The user interface circuitry and user interface software may be configured to facilitate user control of at least some functions of device 612 though use of a display 636. Display 636 may be configured to display at least a portion of a user interface of device 612. Additionally, the display may be configured to facilitate user control of at least some functions of the device (for example, display 636 could be a touch screen).

Software 640 may be stored within memory 634 to provide instructions to processor 628 such that when the instructions are executed, processor 628, device 612 and/or other components of device 612 are caused to perform various functions or methods such as those described herein (for example, as depicted in FIGS. 4-5). The software may comprise machine executable instructions and data used by processor 628 and other components of computing device 612 and may be stored in a storage facility such as memory 634 and/or in hardware logic in an integrated circuit, ASIC, etc. Software may include both applications and/or services and operating system software, and may include code segments, instructions, applets, pre-compiled code, compiled code, computer programs, program modules, engines, program logic, and combinations thereof.

Memory 634 may include any of various types of tangible machine-readable storage medium, including one or more of the following types of storage devices: read only memory (ROM) modules, random access memory (RAM) modules, magnetic tape, magnetic discs (for example, a fixed hard disk drive or a removable floppy disk), optical disk (for example, a CD-ROM disc, a CD-RW disc, a DVD disc), flash memory, and EEPROM memory. As used herein (including the claims), a tangible or non-transitory machine-readable storage medium is a physical structure that may be touched by a human. A signal would not by itself constitute a tangible or non-transitory machine-readable storage medium, although other embodiments may include signals or ephemeral versions of instructions executable by one or more processors to carry out one or more of the operations described herein.

As used herein, processor 628 (and any other processor or computer described herein) may include any of various types of processors whether used alone or in combination with executable instructions stored in a memory or other computer-readable storage medium. Processors should be understood to encompass any of various types of computing structures including, but not limited to, one or more microprocessors, special-purpose computer chips, field-programmable gate arrays (FPGAs), controllers, application-specific integrated circuits (ASICs), hardware accelerators, digital signal processors, software defined radio components, combinations of hardware/firmware/software, or other special or general-purpose processing circuitry.

As used in this application, the term "circuitry" may refer to any of the following: (a) hardware-only circuit implementations (such as implementations in only analog and/or digital circuitry) and (b) combinations of circuits and software (and/or firmware), such as (as applicable): (i) a combination of processor(s) or (ii) portions of processor(s)/software (including digital signal processor(s)), software, and memory(ies) that work together to cause an apparatus, such as a mobile phone, server, or other computing device, to perform various functions) and (c) circuits, such as a microprocessor(s) or a portion of a microprocessor(s), that require software or firmware for operation, even if the software or firmware is not physically present.

These examples of "circuitry" apply to all uses of this term in this application, including in any claims. As an example, as used in this application, the term "circuitry" would also cover an implementation of merely a processor (or multiple processors) or portion of a processor and its (or their) accompanying software and/or firmware. The term "circuitry" would also cover, for example, a radio frequency circuit, a baseband integrated circuit or applications processor integrated circuit for a mobile phone or a similar integrated circuit in a server, a cellular network device, or other network device.

Device 612 or its various components may be mobile and be configured to receive, decode and process various types of transmissions including transmissions in Wi-Fi networks according to a wireless local area network (e.g., the IEEE 802.11 WLAN standards 802.11n, 802.11ac, etc.) and/or wireless metro area network (WMAN) standards (e.g., 802.16), through a specific one or more WLAN transceivers 643, one or more WMAN transceivers 641. Additionally or alternatively, device 612 may be configured to receive, decode and process transmissions through various other transceivers, such as FM/AM Radio transceiver 642, and telecommunications transceiver 644 (e.g., cellular network receiver such as CDMA, GSM, 4G LTE, 5G, etc.). A wired interface 645 (e.g., an Ethernet interface) may be configured to provide communication via a wired communication medium (e.g., fiber, cable, Ethernet, etc.).

Although the above description of FIG. 6 generally relates to a mobile device, other devices or systems may include the same or similar components and perform the same or similar functions and methods. For example, a computer communicating over a wired network connection (for example, the radio access network 103, the core network 105, and the data network service servers 109A-109B) may include the components or a subset of the components described above, and may be configured to perform the same or similar functions as device 612 and its components. Further access points as described herein may include the components, a subset of the components, or a multiple of the components (e.g., integrated in one or more servers) configured to perform the steps described herein.

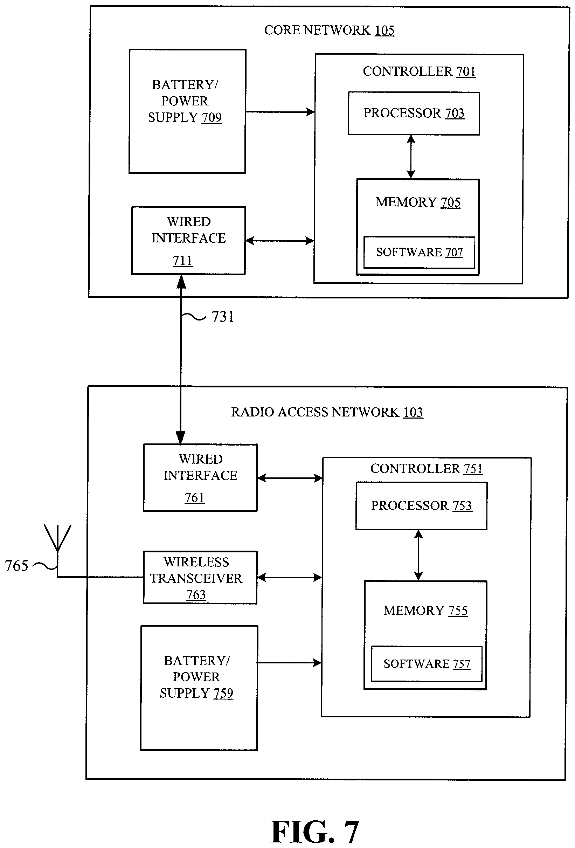

FIG. 7 illustrates an example system that may be used in a communication network such as the one shown in FIG. 1, to implement various devices described herein, such as core networks (e.g., the core network 105), radio access networks (e.g., the radio access network 103), and/or other computing devices to perform the steps described above and in FIGS. 3A, 3B, 4, and 5. The system may comprise one or more core networks (e.g., the core network 105), one or more radio access networks (e.g., the radio access network 103), and one or more communication links (e.g., communication link 731).

The core network 105 may include a controller 701, which may include circuitry, such as one or more processors 703 and one or more memory 705 storing software 707 (e.g., computer executable instructions). The software 707 may comprise, for example, the network functions 151-162. Software 707 may be stored within memory 705 to provide instructions to processor 703 such that when the instructions are executed, processor 703, the core network 105 and/or other components of the core network 105 are caused to perform various functions or methods such as those described herein (for example, as depicted in FIGS. 3A, 3B, 4, and 5). The core network 105 may include general-purpose processors, digital signal processors, hardware accelerators, or software defined radio components.

The core network 105 may include a battery 709 or other power supply device, and one or more wired interface 711. The wired interface 711 (e.g., an Ethernet interface) may be configured to provide communication via a wired communication medium (e.g., fiber, cable, Ethernet, etc.). The wired interface 711 may communicate with a wired interface 761 in the radio access network 103 via the communication link 731. The wired interface 711 may also communicate with a network (e.g., the data network 107).

The radio access network 103 may include a controller 751, which may include circuitry, such as one or more processors 753 and one or more memory 755 storing software 757 (e.g., computer executable instructions). The software 757 may comprise, for example, a radio protocol stack that is implemented by the radio access network 103. Software 757 may be stored within memory 755 to provide instructions to processor 753 such that when the instructions are executed, processor 753, radio access network 103 and/or other components of radio access network 103 are caused to perform various functions or methods such as those described herein.

The radio access network 103 may include a battery 759 or other power supply device, one or more wired interface 761, one or more wireless transceiver 763, and one or more antennae 765. The radio access network 103 or its various components may be configured to receive, decode and process transmissions through various transceivers, such as wireless transceiver 763 (e.g., cellular network receiver such as CDMA, GSM, 4G LTE, 5G, etc.). The wireless transceiver 763 may include downlink processing components and/or uplink processing components. The downlink processing components and/or uplink processing components may include radio frequency transmission components, radio frequency reception components, or baseband processing components. Processing components may include general-purpose processors, digital signal processors, software defined radio components, hardware accelerators, or software components. With the wireless transceiver 763 and the antenna 765, the radio access network 103 may be configured to communicate with a user device (e.g., the user device 101) according to various aspects described herein. The wired interface 761 (e.g., an Ethernet interface) may be configured to provide communication via a wired communication medium (e.g., fiber, cable, Ethernet, etc.). The wired interface 761 may communicate with the wired interface 711 in the core network 105 via the communication link 731.

The software may comprise machine executable instructions and data used by processor and other components of the core network 105 and/or the radio access network 103 and may be stored in a storage facility such as memory 705, 755 and/or in hardware logic in an integrated circuit, ASIC, etc. Software may include both applications and/or services and operating system software, and may include code segments, instructions, applets, pre-compiled code, compiled code, computer programs, program modules, engines, program logic, and combinations thereof.

Memory 705, 755 may include any of various types of tangible machine-readable storage medium, including one or more of the following types of storage devices: read only memory (ROM) modules, random access memory (RAM) modules, magnetic tape, magnetic discs (for example, a fixed hard disk drive or a removable floppy disk), optical disk (for example, a CD-ROM disc, a CD-RW disc, a DVD disc), flash memory, and EEPROM memory. As used herein (including the claims), a tangible or non-transitory machine-readable storage medium is a physical structure that may be touched by a human. A signal would not by itself constitute a tangible or non-transitory machine-readable storage medium, although other embodiments may include signals or ephemeral versions of instructions executable by one or more processors to carry out one or more of the operations described herein.

As used herein, processor 703, 753 (and any other processor or computer described herein) may include any of various types of processors whether used alone or in combination with executable instructions stored in a memory or other computer-readable storage medium. Processors should be understood to encompass any of various types of computing structures including, but not limited to, one or more microprocessors, special-purpose computer chips, field-programmable gate arrays (FPGAs), controllers, application-specific integrated circuits (ASICs), combinations of hardware/firmware/software, or other special or general-purpose processing circuitry.

## Claims

1. A method comprising:
receiving (301), by a computing device associated with a first network, from an application or service server, and via a second network, quality of service, QoS, information, wherein the QoS information associates an application or service with one or more QoS flow identifiers, QFIs, and wherein the computing device is configured to operate as a QoS management function, QMF, and a Network Exposure Function, NEF;
generating (303), based on the QoS information, a QoS profile that indicates the one or more QFIs;
determining (313) that the QoS profile is associated with a user device based on an indication of a PDU session established for the user device and associated with the transportation of data for the application or service,
sending (315) the QoS profile to the user device via the first network, receiving (323) from the user device, via the first network, a selected QFI from the one or more QFIs, and
sending (329), by the computing device, a request to modify the PDU session, wherein the request to modify the PDU session indicates the selected QFI, and wherein the request to modify the PDU session is configured to cause performance of a procedure for modifying, based on the selected QFI, the PDU session.

2. The method of claim 1, wherein determining whether the QoS profile is associated with the user device is performed based on a determination that usage of at least one QFI in the QoS profile is charged to the user device or the application or service server.

3. The method of any one of claims 1 or 2, wherein the QoS information comprises one or more first indications that associate the one or more QFIs with identifiers for the types of data to be transported via the first network.

4. The method of claim 3, wherein the identifiers for the types of data to be transported via the first network comprise a source address or a destination address.

5. An apparatus comprising:
one or more processors; and
memory storing instructions that, when executed by the one or more processors, cause the apparatus to:
receive, from an application or service server, and via a second network, quality of service, QoS, information, wherein the QoS information associates an application or service with one or more QoS flow identifiers, QFIs, wherein the apparatus is configured to operate as a QoS management function, QMF, and a Network Exposure Function, NEF, and wherein the apparatus is associated with a first network;
generate, based on the QoS information, a QoS profile that indicates the one or more QFIs;
determine that the QoS profile is associated with a user device based on an indication of a PDU session established for the user device and associated with the transportation of data for the application or service,
send the QoS profile to the user device via the first network,
receive from the user device, via the first network, a selected QFI from the one or more QFIs, and
send a request to modify the PDU session, wherein the request to modify the PDU session indicates the selected QFI, and wherein the request to modify the PDU session is configured to cause performance of a procedure for modifying, based on the selected QFI, the PDU session.

6. The apparatus of claim 5, wherein the instructions that, when executed by the one or more processors, cause the apparatus to determine whether the QoS profile is associated with the user device based on a determination that usage of at least one QFI in the QoS profile is charged to the user device or the application or service server.

7. The apparatus of any one of claims 5 or 6, wherein the QoS information comprises one or more first indications that associate the one or more QFIs with identifiers for the types of data to be transported via the first network.

8. The apparatus of claim 7, wherein the identifiers for the types of data to be transported via the first network comprise a source address or a destination address.

9. The apparatus of any one of claims 7 or 8, wherein the QoS information comprises one or more second indications that associate the one or more QFIs with criteria for when the one or more QFIs may be used, one or more third indications that associate the one or more QFIs with charging information indicating which entity is to be charged for network usage.

10. The apparatus of claim 9, wherein the QoS profile comprises the one or more first indications, the one or more second indications, and the one or more third indications.

11. The apparatus of any one of claims 5 to 10, wherein the application or service is associated with virtual reality or augmented reality.

12. The apparatus of any one of claims 5 to 11, wherein the first network comprises a 5G core network, and wherein the second network comprises an Internet Protocol, IP, network.

13. One or more non-transitory computer-readable media storing instructions that, when executed, cause an apparatus to:
receive, from an application or service server, and via a second network, quality of service, QoS, information, wherein the QoS information associates an application or service with one or more QoS flow identifiers, QFIs, wherein the apparatus is configured to operate as a QoS management function, QMF, and a Network Exposure Function, NEF, and wherein the apparatus is associated with a first network;
generate, based on the QoS information, a QoS profile that indicates the one or more QFIs;
determine that the QoS profile is associated with a user device based on an indication of a PDU session established for the user device and associated with the transportation of data for the application or service;
send the QoS profile to the user device via the first network;
receive from the user device, via the first network, a selected QFI from the one or more QFIs, andsend a request to modify the PDU session, wherein the request to modify the PDU session indicates the selected QFI, and wherein the request to modify the PDU session is configured to cause performance of a procedure for modifying, based on the selected QFI, the PDU session.

## Patentansprüche

1. Verfahren, das Folgendes umfasst:
Empfangen (301) von Dienstqualitäts(QoS)-Informationen durch eine Datenverarbeitungsvorrichtung, die mit einem ersten Netzwerk verknüpft ist, von einem Anwendungs- oder Dienstserver und via ein zweites Netzwerk, wobei die QoS-Informationen eine Anwendung oder einen Dienst mit einer oder mehreren QoS-Stromkennungen, QFIs, verknüpft und wobei die Datenverarbeitungsvorrichtung dazu ausgelegt ist, als eine QoS-Verwaltungsfunktion, QMF, und eine Netzwerkgefährdungsfunktion, NEF, betrieben zu werden;
Erzeugen (303) eines QoS-Profils, das die eine oder die mehreren QFIs anzeigt, auf Basis der QoS-Informationen;
Bestimmen (313), dass das QoS-Profil mit einer Benutzervorrichtung verknüpft ist, auf Basis einer Anzeige einer PDU-Sitzung, die für die Benutzervorrichtung eingerichtet und mit dem Transport von Daten für die Anwendung oder den Dienst verknüpft ist,
Senden (315) des QoS-Profils via das erste Netzwerk an die Benutzervorrichtung,
Empfangen (323) einer ausgewählten QFI der einen oder der mehreren QFIs via das erste Netzwerk von der Benutzervorrichtung und
Senden (329) einer Anforderung zum Modifizieren der PDU-Sitzung durch die Datenverarbeitungsvorrichtung, wobei die Anforderung zum Modifizieren der PDU-Sitzung die ausgewählte QFI anzeigt, und wobei die Anforderung zum Modifizieren der PDU-Sitzung dazu ausgelegt ist, eine Durchführung einer Prozedur zum Modifizieren der PDU-Sitzung auf Basis der ausgewählten QFI zu veranlassen.

2. Verfahren nach Anspruch 1, wobei das Bestimmen, ob das QoS-Profil mit der Benutzervorrichtung verknüpft ist, auf Basis einer Bestimmung durchgeführt wird, dass eine Nutzung von mindestens einer QFI im QoS-Profil der Benutzervorrichtung oder dem Anwendungs- oder Dienstserver in Rechnung gestellt wird.

3. Verfahren nach einem der Ansprüche 1 oder 2, wobei die QoS-Informationen eine oder mehrere erste Anzeigen umfassen, die die eine oder die mehreren QFIs mit Kennungen für die Arten von Daten verknüpfen, die via das erste Netzwerk zu transportieren sind.

4. Verfahren nach Anspruch 3, wobei die Kennungen für die Arten von Daten, die via das erste Netzwerk zu transportieren sind, eine Quelladresse oder eine Zieladresse umfassen.

5. Einrichtung, die Folgendes umfasst:
einen oder mehrere Prozessoren; und
einen Speicher, in dem Anweisungen gespeichert sind, die, wenn sie von dem einen oder den mehreren Prozessoren ausgeführt werden, die Einrichtung zu Folgendem veranlassen:
Empfangen von Dienstqualitäts(QoS)-Informationen von einem Anwendungs- oder Dienstserver und via ein zweites Netzwerk, wobei die QoS-Informationen eine Anwendung oder einen Dienst mit einer oder mehreren QoS-Stromkennungen, QFIs, verknüpft, wobei die Einrichtung dazu ausgelegt ist, als eine QoS-Verwaltungsfunktion, QMF, und eine Netzwerkgefährdungsfunktion, NEF, betrieben zu werden, und wobei die Einrichtung mit einem ersten Netzwerk verknüpft ist;
Erzeugen eines QoS-Profils, das die eine oder die mehreren QFIs anzeigt, auf Basis der QoS-Informationen;
Bestimmen, dass das QoS-Profil mit einer Benutzervorrichtung verknüpft ist, auf Basis einer Anzeige einer PDU-Sitzung, die für die Benutzervorrichtung eingerichtet und mit dem Transport von Daten für die Anwendung oder den Dienst verknüpft ist,
Senden des QoS-Profils via das erste Netzwerk an die Benutzervorrichtung,
Empfangen einer ausgewählten QFI der einen oder der mehreren QFIs via das erste Netzwerk von der Benutzervorrichtung, und
Senden einer Anforderung zum Modifizieren der PDU-Sitzung, wobei die Anforderung zum Modifizieren der PDU-Sitzung die ausgewählte QFI anzeigt, und wobei die Anforderung zum Modifizieren der PDU-Sitzung dazu ausgelegt ist, eine Durchführung einer Prozedur zum Modifizieren der PDU-Sitzung auf Basis der ausgewählten QFI zu veranlassen.

6. Einrichtung nach Anspruch 5, wobei die Anweisungen, die, wenn sie von einem oder mehreren Prozessoren ausgeführt werden, die Einrichtung veranlassen, auf Basis einer Bestimmung, dass eine Nutzung von mindestens einer QFI im QoS-Profil der Benutzervorrichtung oder dem Anwendungs- oder Dienstserver in Rechnung gestellt wird, zu bestimmen, ob das QoS-Profil mit der Benutzervorrichtung verknüpft ist.

7. Einrichtung nach einem der Ansprüche 5 oder 6, wobei die QoS-Informationen eine oder mehrere erste Anzeigen umfassen, die die eine oder die mehreren QFIs mit Kennungen für die Arten von Daten verknüpfen, die via das erste Netzwerk zu transportieren sind.

8. Vorrichtung nach einem der Ansprüche 7, wobei die Kennungen für die Arten von Daten, die via das erste Netzwerk zu transportieren sind, eine Quelladresse oder eine Zieladresse umfassen.

9. Einrichtung nach einem der Ansprüche 7 oder 8, wobei die QoS-Informationen eine oder mehrere zweite Anzeigen umfassen, die die eine oder die mehreren QFIs mit Kriterien dazu verknüpfen, wann die eine oder die mehreren QFIs verwendet werden können, eine oder mehrere dritte Anzeigen, die die eine oder die mehreren QFIs mit Abrechnungsinformationen verknüpfen, die anzeigen, welcher Entität die Netzwerknutzung in Rechnung zu stellen ist.

10. Einrichtung nach Anspruch 9, wobei das QoS-Profil die eine oder die mehreren ersten Anzeigen, die eine oder die mehreren zweiten Anzeigen und die eine oder die mehreren dritten Anzeigen umfasst.

11. Einrichtung nach einem der Ansprüche 5 bis 10, wobei die Anwendung oder der Dienst mit einer virtuellen Realität oder einer erweiterten Realität verknüpft ist.

12. Einrichtung nach einem der Ansprüche 5 bis 11, wobei das erste Netzwerk ein 5G-Kernnetzwerk umfasst und wobei das zweite Netzwerk ein Internetprotokoll(IP)-Netzwerk umfasst.

13. Ein oder mehrere nichttransitorische computerlesbare Medien, auf denen Anweisungen gespeichert sind, die, wenn sie ausgeführt werden, eine Einrichtung zu Folgendem veranlassen:
Empfangen von Dienstqualitäts(QoS)-Informationen von einem Anwendungs- oder Dienstserver und via ein zweites Netzwerk, wobei die QoS-Informationen eine Anwendung oder einen Dienst mit einer oder mehreren QoS-Stromkennungen, QFIs, verknüpft, wobei die Einrichtung dazu ausgelegt ist, als eine QoS-Verwaltungsfunktion, QMF, und eine Netzwerkgefährdungsfunktion, NEF, betrieben zu werden, und wobei die Einrichtung mit einem ersten Netzwerk verknüpft ist;
Erzeugen eines QoS-Profils, das die eine oder die mehreren QFIs anzeigt, auf Basis der QoS-Informationen;
Bestimmen, dass das QoS-Profil mit einer Benutzervorrichtung verknüpft ist, auf Basis einer Anzeige einer PDU-Sitzung, die für die Benutzervorrichtung eingerichtet und mit dem Transport von Daten für die Anwendung oder den Dienst verknüpft ist;
Senden des QoS-Profils via das erste Netzwerk an die Benutzervorrichtung;
Empfangen einer ausgewählten QFI der einen oder der mehreren QFIs via das erste Netzwerk von der Benutzervorrichtung und Senden einer Anforderung zum Modifizieren der PDU-Sitzung, wobei die Anforderung zum Modifizieren der PDU-Sitzung die ausgewählte QFI anzeigt und wobei die Anforderung zum Modifizieren der PDU-Sitzung dazu ausgelegt ist, eine Durchführung einer Prozedur zum Modifizieren der PDU-Sitzung auf Basis der ausgewählten QFI zu veranlassen.

## Revendications

1. Procédé comprenant les étapes suivantes :
recevoir (301) d'un serveur d'application ou de service, par un dispositif informatique associé à un premier réseau, des informations de qualité de service, QoS, via un deuxième réseau, dans lequel les informations QoS associent une application ou un service à un ou plusieurs identifiants de flux QoS, QFI, et dans lequel le dispositif informatique est configuré pour fonctionner comme une fonction de gestion QoS, QMF, et une fonction d'exposition de réseau, NEF ;
sur la base des informations QoS, générer (303) un profil QoS qui indique les un ou plusieurs QFI ;
déterminer (313) que le profil QoS est associé à un dispositif utilisateur sur la base d'une indication d'une session PDU établie pour le dispositif utilisateur et associée au transport de données pour l'application ou le service,
envoyer (315) le profil QoS au dispositif utilisateur via le premier réseau,
recevoir (323) du dispositif utilisateur, via le premier réseau, un QFI sélectionné dans les un ou plusieurs QFI, et
envoyer (329), par le dispositif informatique, une demande de modifier la session PDU, dans lequel la demande de modifier la session PDU indique le QFI sélectionné, et dans lequel la demande de modifier la session PDU est configurée pour entraîner la réalisation d'une procédure pour modifier la session PDU sur la base du QFI sélectionné.

2. Procédé de la revendication 1, dans lequel le fait de déterminer si le profil QoS est associé au dispositif utilisateur est basé sur une détermination selon laquelle l'utilisation d'au moins un QFI dans le profil QoS est facturée au dispositif utilisateur ou au serveur d'application ou de service.

3. Procédé de l'une quelconque des revendications 1 ou 2, dans lequel les informations QoS comprennent une ou plusieurs premières indications qui associent les un ou plusieurs QFI à des identifiants pour les types de données à transporter via le premier réseau.

4. Procédé de la revendication 3, dans lequel les identifiants des types de données à transporter via le premier réseau comprennent une adresse source ou une adresse de destination.

5. Appareil comprenant :
un ou plusieurs processeurs ; et
une mémoire stockant des instructions qui, lorsqu'elles sont exécutées par les un ou plusieurs processeurs, amènent l'appareil à :
recevoir d'un serveur d'application ou de service des informations de qualité de service, QoS, via un deuxième réseau, dans lequel les informations QoS associent une application ou un service à un ou plusieurs identifiants de flux QoS, QFI, dans lequel l'appareil est configuré pour fonctionner comme une fonction de gestion QoS, QMF, et une fonction d'exposition de réseau, NEF, et dans lequel l'appareil est associé à un premier réseau ;
sur la base des informations QoS, générer un profil QoS qui indique les un ou plusieurs QFI ;
déterminer que le profil QoS est associé à un dispositif utilisateur sur la base d'une indication d'une session PDU établie pour le dispositif utilisateur et associée au transport de données pour l'application ou le service,
envoyer le profil QoS au dispositif utilisateur via le premier réseau,
recevoir du dispositif utilisateur, via le premier réseau, un QFI sélectionné dans les un ou plusieurs QFI, et
envoyer une demande de modifier la session PDU, dans lequel la demande de modifier la session PDU indique le QFI sélectionné, et dans lequel la demande de modifier la session PDU est configurée pour entraîner la réalisation d'une procédure pour modifier la session PDU sur la base du QFI sélectionné.

6. Appareil de la revendication 5, dans lequel les instructions, lorsqu'elles sont exécutées par les un ou plusieurs processeurs, amènent l'appareil à déterminer si le profil QoS est associé au dispositif utilisateur sur la base d'une détermination selon laquelle l'utilisation d'au moins un QFI dans le profil QoS est facturée au dispositif utilisateur ou au serveur d'application ou de service.

7. Appareil de l'une quelconque des revendications 5 ou 6, dans lequel les informations QoS comprennent une ou plusieurs premières indications qui associent les un ou plusieurs QFI à des identifiants pour les types de données à transporter via le premier réseau.

8. Appareil de la revendication 7, dans lequel les identifiants des types de données à transporter via le premier réseau comprennent une adresse source ou une adresse de destination.

9. Appareil de l'une quelconque des revendications 7 ou 8, dans lequel les informations QoS comprennent une ou plusieurs deuxièmes indications qui associent les un ou plusieurs QFI à des critères du moment où les un ou plusieurs QFI peuvent être utilisés, une ou plusieurs troisièmes indications qui associent les un ou plusieurs QFI à des informations de facturation indiquant quelle entité doit être facturée pour l'utilisation du réseau.

10. Appareil de la revendication 9, dans lequel le profil QoS comprend les une ou plusieurs premières indications, les une ou plusieurs deuxièmes indications, et les une ou plusieurs troisièmes indications.

11. Appareil de l'une quelconque des revendications 5 à 10, dans lequel l'application ou le service est associé ou associée à une réalité virtuelle ou à une réalité augmentée.

12. Appareil de l'une quelconque des revendications 5 à 11, dans lequel le premier réseau comprend un réseau central 5G, et dans lequel le deuxième réseau comprend un réseau de protocole Internet, IP.

13. Un ou plusieurs supports non transitoires lisibles par ordinateur stockant des instructions qui, lorsqu'elles sont exécutées, amènent un appareil à :
recevoir d'un serveur d'application ou de service des informations de qualité de service, QoS, via un deuxième réseau, dans lesquels les informations QoS associent une application ou un service à un ou plusieurs identifiants de flux QoS, QFI, dans lesquels l'appareil est configuré pour fonctionner comme une fonction de gestion QoS, QMF, et une fonction d'exposition de réseau, NEF, et dans lesquels l'appareil est associé à un premier réseau ;
sur la base des informations QoS, générer un profil QoS qui indique les un ou plusieurs QFI ;
déterminer que le profil QoS est associé à un dispositif utilisateur sur la base d'une indication d'une session PDU établie pour le dispositif utilisateur et associée au transport de données pour l'application ou le service ;
envoyer le profil QoS au dispositif utilisateur via le premier réseau ;
recevoir du dispositif utilisateur, via le premier réseau, un QFI sélectionné dans les un ou plusieurs QFI, et envoyer une demande de modifier la session PDU, dans lesquels la demande de modifier la session PDU indique le QFI sélectionné, et dans lesquels la demande de modifier la session PDU est configurée pour entraîner la réalisation d'une procédure pour modifier la session PDU sur la base du QFI sélectionné.
